# EUROPEAN PATENT APPLICATION

(11) **EP 3 208 300 A1**
(43) Date of publication of application: **23.08.2017**
(21) Application number: 16382064.0
(22) Date of filing: 17.02.2016
(51) Int. Cl.: C08K 3/04

(54) **POLYMER COMPOSITIONS OF POLYOL ETHER AND GRAPHENE OXIDE FOR POLYURETHANE APPLICATIONS**

(71) Applicant: Repsol, S.A., 28045 Madrid (ES)
(72) Inventor: RUIZ ORTA, Carolina, E-28935 Móstoles - Madrid (ES); VÁZQUEZ, Ana Belén, E-28935 Móstoles - Madrid (ES); MÉNDEZ, Luis, E-28935 Móstoles - Madrid (ES); DOMÍNGUEZ RAMOS, Enrique, E-28935 Móstoles - Madrid (ES); PARIS ESCRIBANO, Rodrigo, E-28935 Móstoles - Madrid (ES); ALONSO, Beatriz, E-20018 Donostia - San Sebastián (ES); ZURUTUZA, Amaia, E-20018 Donostia - San Sebastián (ES)
(74) Representative: ABG Patentes, S.L.

(57) **Abstract**

The present invention relates to a polymer composition comprising a polyol ether and graphene oxide, wherein said polyol ether has terminal groups consisting of polyethylene oxide blocks which are present in the polyol ether in a weight proportion of up to 20 wt%. The invention also refers to a process for preparing a polyurethane formulation from said polymer composition and the use of said polyurethane formulation in CASE applications and in the preparation of polyurethane foams and thermoplastic polyurethane.

## Description

### FIELD OF THE INVENTION

The present invention refers to polymer compositions reinforced with graphene oxide to be used in the preparation of polyurethane formulations, and more particularly, polyurethane foams with improved thermal stability and fireproof properties.

### BACKGROUND

Polymer/layered compound nanocomposites, also known as PLCN, are nanocomposites formed by a polymeric matrix and two-dimensional nanofillers, such as montmorillonite, layered double hydroxides, layer metal phosphate or layer carbon material.

Generally, PLCNs exhibit superior flame retardancy compared to the corresponding pure polymers, due to the fact that layered compounds possess a barrier effect. However, the addition of layered compounds could not decrease the total heat release (THR) of PLCNs efficiently and, therefore they may be useful as a component of flame retardant systems but not an efficient flame retardant when used alone. Combinations of PLCNs with metal ions and traditional flame retardants are predicted to have high probability to enhance the fire safety of polymeric materials, since they can catalyze the charring process during combustion and restrain the release of combustible gases.

The main parameters used to quantify the flame retardant properties of a polymeric material are the following: Peak Heat Release Rate (pHRR), Total Heat Release (THR), Time to Ignition (TTI), UL-94 and Limiting Oxygen Index (LOI). As for the flame retardant mechanism, the mechanism of polymer/layered compound nanocomposites can be generally divided into three key points: the barrier effect, the migration effect, and the catalyzing charring effect. Generally, the pure polymer has high pHRR values, however, when these key points play a role in the condensed phase, the nanocomposites exhibited reduced pHRR, which is due to the previous three effects. Although the layered compounds could reduce the pHRR of the nanocomposites, the layered compounds contribute little to the reducing of THR. Thus, layered compounds should be combined with traditional flame retardants in order for the nanocomposite to exhibit high flame retardant efficiency, especially the THR.

Graphene and its derivatives are a particular case of two-dimensional nanofillers used in PLCNs. Graphene degrades in air below 600 °C, however it is very stable under nitrogen atmosphere (above 800 °C). Therefore, if an inert atmosphere is formed around the graphene sheets, there is a high probability to prevent its combustion and a graphitic sheet could be formed acting as O₂ barrier layer (intumescent effect).

In fact, if the single layers of graphene could be well dispersed in the polymer matrix, these would constitute the ideal layered flame retardant. However, due to strong interactions among the graphene monolayers, graphene aggregates easily in the polymer matrix, especially when the graphene is dried. As a result, the strong tendency to re-aggregation makes it difficult for the graphene to disperse well in the polymer matrix by only melt blending.

Of particular interest has been the use of graphene oxide which can be obtained when bulk graphite is exposed to strong oxidizers, such as sulfuric acid, potassium chlorate, nitric acid or potassium permanganate. This leads to the introduction of oxygen-containing functional groups, including hydroxyl and epoxy groups that facilitate the exfoliation of the graphene layers, however the problem of obtaining a good dispersion still remains.

Moreover, the graphene oxide can have a similar effect to that of expanded graphite. In this case, when combustion occurs, the sulfuric acid entrapped between the graphite sheets, causes a chemical reaction by which CO₂, H₂O and SO₂ gases are released, expanding the graphite sheets and all acting as a barrier to oxygen. However, in the case of graphene oxide, a concentration of about 15% by weight is necessary in order for itself to have fire retardant properties similar to expanded graphite. Therefore, the high content of graphene oxide in the polymer matrix renders the latter system economically unfeasible.

There are several articles in which the strategy is to chemically modify the graphene oxide by the addition of flame retardants, such as HCCP, a chlorinated phosphazene (Bao, C. et al., J. Mat. Chem., 2012, 22, 23057-23063) or DOPO-BQ, a cyclic phosphate with diphenyl structure (Hu, W. et al., Fire Safety Science, 2014).

However, as in the case of graphene, it would be desirable to provide polymer compositions in which the graphene oxide could be homogeneously dispersed in the polymer matrix without the formation of aggregates. This would also allow reducing the content of graphene oxide while maintaining the fire retardant properties.

EP 2871207 describes the preparation of polyurethane foams with a reduced flammability obtained from the reaction of a mixture comprising a polyetherol (polyol ether) and graphene oxide with a polyisocyanate. The polyetherol is defined as a function of very broad parameters, such as a molecular weight ranging from 400 to 150.000 g/mol, a hydroxyl number between 10 and 700 mg KOH/g and a functionality from 2 to 6, thus including almost any polyol ether. Particular mention is made to the dispersion of graphene oxide in the polymer, however, there is no data related to particular polyol ethers used to disperse said graphene oxide.

The application WO2013/154615 refers to a process for preparing an aqueous dispersion of graphene by the addition of graphite flakes to an aqueous medium comprising a polymer having polyethylene oxide groups, and subsequent sonication to exfoliate the graphene flakes. The polymers used are all based on di- or tri-block copolymers of ethylene oxide and propylene oxide, particularly those known as Pluronic or Tectronic.

Yan, Y et al. [RCS Advances, 2015, 5, 40199-40204] describe the effect caused by Pluronic block copolymers on aqueous dispersions of graphene oxide. Particularly, triblock copolymers F127 and P123 are described being constituted by a central block of polypropylene oxide and terminal blocks of polyethylene oxide and having a high weight percentage of polyethylene oxide in the polymer chain. However, these kind of polymers are very viscous to be used as polymer matrix since the graphene oxide may not be well dispersed therein, thus requiring the use of dispersing agents to facilitate said dispersion and to maintain low viscosities which are essential for material processing, especially when they are applied for the manufacture of polyurethanes.

Thus, there still exists the need to develop polymer compositions that allow improving the dispersion of the graphene oxide within the polymer matrix.

### BRIEF DESCRIPTION OF THE INVENTION

The authors of the present invention have found that a polymer composition comprising a polyol ether having polyethylene oxide blocks as terminal groups and low molecular weight provides a better and more homogenous dispersion of graphene oxide throughout the whole polymer matrix, without the need of incorporating dispersants or agents that facilitate the dispersion of the graphene oxide in the polymer matrix.

This improved dispersion of the graphene allows the use of said polymer composition to prepare polyurethane formulations, such as polyurethane foams, with an improved thermal stability, thus reducing the flammability and ameliorating the fireproof properties of the polyurethane formulations obtained from said polymer composition.

According to the experimental data provided in the present document, a significant reduction in the flame growth and combustion time of the polyurethane foam is observed, even when low amounts of graphene oxide are incorporated therein.

Thus, a first aspect of the present invention refers to a polymer composition comprising:
a) a polyol ether comprising ethylene oxide units and propylene oxide units, wherein said polyol ether has:
   - an equivalent molecular weight equal to or less than 2,000 g/mol;
   - from 10 to 90 wt% of ethylene oxide units;
   - a central backbone comprising propylene oxide units, or propylene oxide and ethylene oxide units randomly distributed within said central backbone,
   - terminal groups consisting of polyethylene oxide blocks, wherein said polyethylene oxide blocks are present in the polyol ether in a weight proportion of up to 20 wt%,
   wherein all the weight percentages are referred to the total weight of the polyol ether, and
b) graphene oxide. A second aspect of the invention relates to a process (from now onwards process 1) for preparing the polymer composition as described above, said process comprises:
   a) providing a dispersion of graphene oxide in a polar solvent;
   b) mixing the dispersion of graphene oxide provided in step a) with a polyol ether, wherein said polyol ether comprises ethylene oxide units and propylene oxide units, wherein said polyol ether has:
      - an equivalent molecular weight equal to or less than 2,000 g/mol;
      - from 10 to 90 wt% of ethylene oxide units;
      - a central backbone comprising propylene oxide units, or propylene oxide and ethylene oxide units randomly distributed within said central backbone,
      - terminal groups consisting of polyethylene oxide blocks, wherein said polyethylene oxide blocks are present in the polyol ether in a weight proportion of up to 20 wt%,
      wherein all the weight percentages are referred to the total weight of the polyol ether;
      and
   c) removing the polar solvent from the mixture obtained in step b).

A further aspect of the invention refers to a polymer composition obtainable by the process 1 as defined above.

Another aspect of the invention relates to a process (from now onwards process 2) for preparing a polyurethane formulation, said process 2 comprises the reaction of a polymer composition as defined above with one or more di- or poly-isocyanates.

A further aspect of the invention refers to a polyurethane formulation obtainable by the above referred process 2.

Another aspect of the invention relates to the use of the polyurethane formulation in CASE (coatings, adhesives, sealants and elastomers) applications and in the preparation of polyurethane foams and thermoplastic polyurethanes.

### BRIEF DESCRIPTION OF THE DRAWINGS

Figure 1. Thermal Gravimetric Analysis (TGA) of a polyurethane foam obtained from polymer composition A.
Figure 2. Thermal Gravimetric Analysis (TGA) of a polyurethane foam obtained from polymer composition B.
Figure 3. Thermal Gravimetric Analysis (TGA) of a polyurethane foam obtained from polymer composition D.

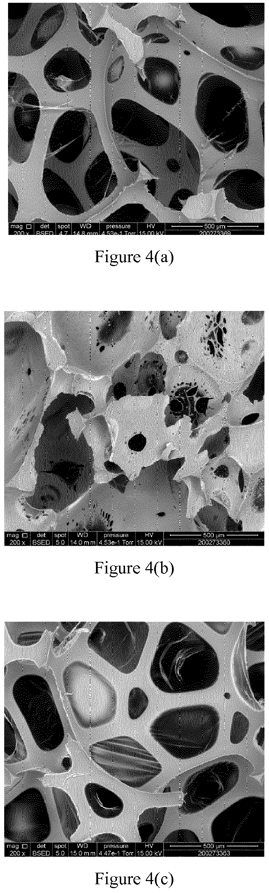

Figure 4. SEM images: (a) polyurethane foam from composition A; (b) polyurethane from composition B; (c) polyurethane foam from composition D (comparative).
Figure 5. Optical Microscopy images: (a) polyurethane foam from composition A; (b) polyurethane from compostion B; (c) polyurethane foam from composition D (comparative).

### DETAILED DESCRITPION OF THE INVENTION

The present invention provides a polymer composition characterized by having graphene oxide sheets homogeneously dispersed in the polymer matrix, which allows the production of polyurethane formulations, such as polyurethane foams, with improved thermal stability and fireproof properties.

The polymer composition comprises:
a) a polyol ether comprising ethylene oxide units and propylene oxide units, wherein said polyol ether has:
   - an equivalent molecular weight equal to or less than 2,000 g/mol;
   - from 10 to 90 wt% of ethylene oxide units;
   - a central backbone comprising propylene oxide units, or propylene oxide and ethylene oxide units randomly distributed within said central backbone,
   - terminal groups consisting of polyethylene oxide blocks, wherein said polyethylene oxide blocks are present in the polyol ether in a weight proportion of up to 20 wt%,
   wherein all the weight percentages are referred to the total weight of the polyol ether,
   and
b) graphene oxide.

The polyol ether comprised in the composition of the invention is characterized by having a chemical structure formed by a central backbone containing propylene oxide units, or propylene oxide and ethylene oxide units randomly distributed within said central backbone, and polyethylene oxide blocks as terminal groups.

A particular and very basic structure of said polyol ether can be described as follows: 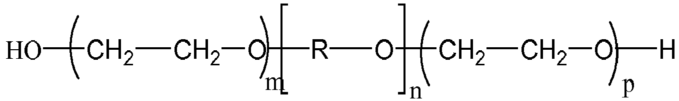 wherein -[R-O]ₙ is the central backbone of the polymer in which R can be propylene, thus providing a block of polypropylene oxide having n propylene oxide units; or ethylene and propylene units thus providing a backbone of n ethylene and propylene oxide units randomly distributed throughout it.

The blocks HO-(CH₂-CH₂-O)ₘ- and (CH₂-CH₂-O)ₚ-H correspond to the terminal polyethylene oxide blocks present in the polyol ether which only comprises m and p repeating units of ethylene oxide.

This particular formula corresponds to the case where the polyol ether is a diol, thus having two terminal hydroxyl groups. However, polyol ether according to the present invention also includes those having more than two hydroxyl groups, such as triols. An example of a triol is herewith provided: 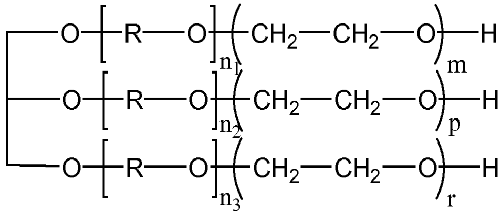 wherein -[R-O]ₙ is as defined above and (CH₂-CH₂-O)ₘ-H (CH₂-CH₂-O)ₚ-H and (CH₂-CH₂-O)ᵣ-H correspond to the terminal polyethylene oxide blocks present in the polyol ether which only comprises m, p and r repeating units of ethylene oxide.

In a preferred embodiment, m=p=r so as the length of each terminal block is the same. In another preferred embodiment, n₁=n₂=n₃ so as the length of each backbone block is the same. In a more preferred embodiment, m=p=r and n₁=n₂=n₃.

In a preferred embodiment, the polyol ether is a diol or a triol.

The total weight percentage of terminal polyethylene oxide groups with respect to the total weight of the polyol ether does not exceed 20 wt%. Thus, the values of the indexes m, p and r as described in the formulas above should be such that the total weight of the polyethylene oxide terminal blocks does not exceed 20 wt% with respect to the total weight of the polyol ether.

In a particular embodiment, the weight percentage of polyethylene oxide terminal blocks with respect to the total weight of the polyol ether ranges from 0.5 to 20 wt%, more preferably from 5 to 20 wt%, even more preferably from 10 to 20 wt%.

In a particular embodiment, the weight percentage of ethylene oxide in the polyol ether ranges from 10 to 90 wt%, more preferably from 10 to 80 wt%, even more preferably from 10 to 75 wt%. Up to 20 wt% of said weight percentages corresponds to polyethylene oxide terminal blocks, being the remaining weight, if any, ethylene oxide units randomly distributed throughout the central polymer backbone as defined above.

In another particular embodiment, the polyol ether comprises up to 20 wt% of ethylene oxide units, wherein all of them form the polyethylene oxide terminal blocks, the central polymer backbone thus consisting of a polypropylene oxide block.

In a preferred embodiment, the polyol ether is a diol or triol having up to 20 wt% of polyethylene oxide terminal blocks, the remaining weight corresponds to a central backbone of polypropylene oxide. In another preferred embodiment, the polyol ether is a diol or triol having a central backbone of polypropylene oxide and ethylene oxide randomly distributed.

The polyol ether comprised in the composition of the invention is also characterized by having an equivalent molecular weight equal to or less than 2,000 g/mol, more preferably the equivalent molecular weight ranges from 300 to 2,000 g/mol, even more preferably from 1,000 to 2,000 g/mol.

By the term "equivalent molecular weight" should be understood the ratio between the number average molecular weight and the functionality of the polyol ether, i.e., the number of hydroxyl terminal groups. Thus, in the particular case of a diol (a polyol having two hydroxyl terminal groups), the equivalent molecular weight is the number average molecular weight of the polyol ether divided by 2. In the particular case of a triol (a polyol having three hydroxyl terminal groups), the equivalent molecular weight is the number average molecular weight of the polyol ether divided by 3.

The polyol ether comprised in the composition of the invention can be obtained from conventional methods known to those skilled in the art, for example as described in Ionescu, M. [Chemistry and Technology of Polyols for Polyurethanes, Rapra Technology Limited, 2005].

Said polyol ether can be obtained by the polymerization of alkylene oxides, particularly propylene oxide and ethylene oxide, initiated by at least a polyol called starter or chain initiator, in the presence of a catalyst.

The starter usually has active hydrogen-containing molecules, such as alcohols having two or three hydroxyl groups/mol and amines having at least two -NH₂ groups. Examples of these starters include, without limitation, water, ethylene glycol, diethylene glycol, 1,2-propylene glycol, dipropylene glycol, glycerine, trimethylol propane, 1,2,6-hexanetriol, triethanolamine or ethylenediamine.

The catalyst can be selected among anionic catalysts, such as KOH, NaOH, CsOH, Sr(OH)₂ or Ba(OH)₂; cationic catalysts, particularly Lewis acids and Brönstedt superacids, such as BF₃, BF₅, HPF₆, HBF₄, CF₃SO₃H, Al(CF₃SO₃)₃; and co-ordinative catalyst, such as aluminium and zinc alkyls and alcoholates [Al(OR)₃, Zn(OR)₂] or double metal cyanide (DMC) based on Zn₃[Co(CN)₆]₂.

However, in a preferred embodiment, the catalyst is an anionic catalyst, more preferably is KOH.

The polymerization reaction initiated by a bifunctional starter (i.e. that having two hydroxyl groups), such as 1,2-propylene glycol or ethylene glycol, leads to the formation of polyol ether diols. However, if trifunctional starters (i.e. those having three hydroxyl groups), such as glycerol, are used, a polyol ether triol is formed.

A skilled person would know how to adapt said process to obtain a polyol ether with the particular features described above, more particularly a polyol ether comprising ethylene oxide units and propylene oxide units, wherein said polyol ether has an equivalent molecular weight equal to or less than 2,000 g/mol; from 10 to 90 wt% of ethylene oxide units; and polyethylene oxide blocks as terminal groups, wherein said polyethylene oxide blocks are present in the polyol ether in a weight proportion of up to 20 wt%.

The polymer composition of the invention further comprises graphene oxide.

The term "graphene oxide" refers to an oxidized form of graphene, laced with oxygen-containing groups. Although the precise chemical structure of graphene oxide is a subject of some conjecture, it can simplistically be assumed to be that of a graphene sheet containing bonded oxygen atoms in the form of hydroxyl (C-OH), ketonic (C=O), carboxyl (COOH), epoxide (C-O-C) groups and/or other various C-O and C=O containing chemical structures such as lactol, peroxide, dioxolane, anhydride or ether.

An example of graphene oxide is schematically shown herein:

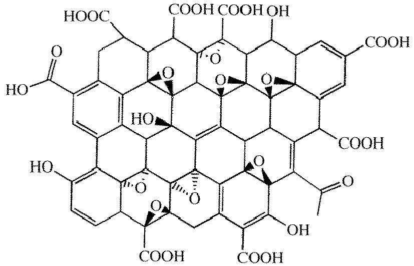

Methods for producing graphene oxide sheets are within the purview of those skilled in the art. For example, graphene oxide is conveniently produced by oxidation of graphite or from the chemical exfoliation of graphite oxide by methods known as Staudenmaier method, Hofmann method, James M Tour method or Hummers method. These methods have been reviewed by Poh et al. (Nanoscale, 2012, 4, 3515-3522) and are described in US 2,798,878, US 8,183,180 and Hummers and Offeman (Journal of American Chemical Society, 1958, 80(6), 1339-1346).

Graphene oxide sheets are also commercially available, for example from Graphenea and Graphene Supermarket, Inc.

Similar to graphene, graphene oxide possesses one-atom thick sheets with high surface-to-volume ratio and extraordinary physical properties. In addition, due to oxygen functional groups such as carboxyls, epoxides, and alcohols, graphene oxide is hydrophilic and can be readily dispersed within a polar and hydrogen-binding liquid, such as water, without the need for the addition of surface active agents such as dispersants, surfactants or stabilizing agents.

In fact, the graphene oxide is readily commercially available in the form of an aqueous suspension.

In an embodiment of the invention, graphene oxide can exfoliate as single sheets when ultrasonicated in water. The average size of an individual graphene oxide sheet, dispersed in water, may be from 10² to 10⁶ nm², with a thickness of from about 1 to about 1.5 nm.

The composition of the invention is characterized by having graphene sheets substantially uniformly dispersed throughout so that the sheets are in the most part relatively evenly distributed throughout the polymer composition.

As pointed out in the experimental part, and compared to other polyol ethers based on propylene oxide or on propylene oxide - ethylene oxide block copolymers with higher amounts of polyethylene oxide as terminal groups or higher molecular weights, the polyol ether incorporated in the polymer composition of the invention provides a composition with an adequate viscosity and hydrophilicity to cause the right compatibility with graphene oxide, improving the dispersion thereof and, thus, allowing a more homogenous distribution of the graphene oxide throughout the polymer matrix.

Due to the improved dispersion of the graphene oxide in the polymer matrix, the polymer composition according to the invention can provide polyurethane formulations exhibiting significantly improved fireproof properties in comparison to other polymer compositions having no graphene oxide or produced from other polyol ethers. In particular, significant improvements in thermal stability and reduction of flammability have been demonstrated with the incorporation of relatively low weight percentages levels of graphene oxide.

In a particular embodiment, the composition of the invention comprises, on a dry weight basis, from 0.001 to 5 wt% of graphene oxide, more preferably from 0.05 to 2 wt%, even more preferably from 0.1 to 2 wt%, and most preferably 1 wt%, with respect to the total weight of the composition.

As mentioned herein above, the use of a polyol ether with the particular features mentioned before provides a better and more homogenous dispersion of graphene oxide throughout the whole polymer matrix, without the need of incorporating dispersants or agents that facilitate the dispersion of the graphene oxide in the polymer matrix.

Thus, in another particular embodiment, the composition of the invention comprises a polyether polyol as defined above and graphene oxide, and is devoid of any dispersing agent or of any compound acting as dispersant.

In another particular embodiment, the composition of the invention comprises a polyether polyol as defined above and graphene oxide, and is devoid of any dispersant, surfactant or stabilizing agent.

In another particular embodiment, the polymer composition of the invention further comprises a polyol ether based on propylene oxide units, i.e., a polyol ether having only propylene oxide units or polypropylene oxide. The addition of this further component can improve even more the dispersion of graphene, also allowing the use of the polymer composition in many different applications.

In a second aspect, the present invention relates to a process 1 for preparing a polymer composition as described above, said process comprises:
a) providing a dispersion of graphene oxide in a polar solvent;
b) mixing the dispersion of graphene oxide provided in step a) with a polyol ether, wherein said polyol ether comprises ethylene oxide units and propylene oxide units, wherein said polyol ether has:
   - an equivalent molecular weight equal to or less than 2,000 g/mol;
   - from 10 to 90 wt% of ethylene oxide units;
   - a central backbone comprising propylene oxide units, or propylene oxide and ethylene oxide units randomly distributed within said central backbone,
   - terminal groups consisting of polyethylene oxide blocks, wherein said polyethylene oxide blocks are present in the polyol ether in a weight proportion of up to 20 wt%,
   wherein all the weight percentages are referred to the total weight of the polyol ether; and
c) removing the polar solvent from the mixture obtained in step b).
Step a) of the process 1 of the invention is the provision of a dispersion of graphene oxide in a polar solvent. In a particular embodiment, the polar solvent is added to the appropriate amount of graphene oxide and the resulting mixture is homogenized until a homogenous dispersion of graphene oxide in the polar solvent is obtained.

As used herein, the term "homogenous dispersion" refers to a system in which particles or sheets of graphene oxide are dispersed in the liquid medium (polar solvent) and are assumed to be statistically distributed.

In a preferred embodiment, the polar solvent is selected from water, tetrahydrofuran, dimethyl formamide, acetone and an alcohol such as ethanol or isopropyl alcohol. More preferably, the polar solvent is water, thus forming an aqueous dispersion of graphene oxide.

In another preferred embodiment, the mixture of the polar solvent and graphene oxide is homogenized by using a mechanical stirrer, a high shear mixer and/or ultrasound techniques, so as single sheets of graphene oxide are exfoliated and dispersed in the liquid medium (polar solvent). In a more preferred embodiment, the mixture is first stirred and then subjected to ultrasounds.

Particularly, more than 95 wt% of graphene oxide is in the form of monolayers, i.e., in the form of individual sheets homogeneously distributed or dispersed in the polar solvent.

In another particular embodiment, the dispersion comprises from 0.1 to 10 wt% of graphene oxide, more preferably from 0.2 to 8 wt%, even more preferably from 1 to 6 wt% of graphene oxide, with respect to the total weight of the dispersion including the polar solvent.

In another particular embodiment, the dispersion of graphene oxide is devoid of any dispersing agent. Even in another particular embodiment, the dispersion of graphene oxide is devoid of any dispersing, stabilizing or surfactant agent.

The second step of the process 1 of the invention consists in the mixture of the polyol ether with the dispersion of graphene oxide.

The polyol ether is characterized by having a chemical structure formed by a central backbone containing propylene oxide units, or propylene oxide and ethylene oxide units randomly distributed within said central backbone, and polyethylene oxide blocks as terminal groups.

In a particular embodiment, the polyol ether is a diol or a triol.

In a particular embodiment, the weight percentage of terminal polyethylene oxide groups with respect to the total weight of the polyol ether ranges from 5 to 20 wt%, more preferably from 10 to 20 wt%.

In a particular embodiment, the weight percentage of ethylene oxide in the polyol ether ranges from 10 to 90 wt%, more preferably from 10 to 80 wt%. Up to 20 wt% of said weight percentages corresponds to polyethylene oxide terminal blocks, being the remaining weight, if any, ethylene oxide units randomly distributed throughout the central polymer backbone as defined above.

In another particular embodiment, the polyol ether comprises up to 20 wt% of ethylene oxide units, wherein all of them form the polyethylene oxide terminal blocks, the central polymer backbone thus consisting of a polypropylene oxide block.

In a preferred embodiment, the polyol ether is a diol or triol having up to 20 wt% of polyethylene oxide terminal blocks, the remaining weight corresponds to a central backbone of polypropylene oxide.

The polyol ether used in the process 1 of the invention is also characterized by having an equivalent molecular weight equal to or less than 2,000 g/mol, more preferably the equivalent molecular weight ranges from 300 to 2,000 g/mol, even more preferably from 1,000 to 2,000 g/mol.

In a preferred embodiment, the dispersion of graphene oxide is added to the polyol ether. Once the mixture is obtained, this is preferably subjected to homogenization so as the graphene oxide can be homogeneously distributed throughout the polymer matrix.

Preferably, the mixture is homogenized by means of a mechanical stirrer, a high shear mixer and/or ultrasound techniques. In a particular embodiment, the mixture is homogenized in a high shear mixer, such as Turrax^{®} from IKA, for at least 10 minutes and using different stirring rates. For example, the mixture is initially stirred at a low rate and then gradually increased up to 10,000 rpm until the graphene oxide is properly dispersed in the entire volume of the mixture.

In a more preferred embodiment, the mixture is first stirred and then subjected to ultrasounds.

After the mixing step, the single sheets of graphene oxide are then exfoliated and dispersed in the polymer matrix. Particularly, more than 95 wt% of graphene oxide is in monolayer form, i.e., in the form of individual sheets homogeneously distributed or dispersed in the polymer matrix.

In a particular embodiment, the mixture obtained after step b) of the process 1 of the invention is devoid of any dispersing agent. Even more particularly, the mixture of graphene oxide and the polyol ether is devoid of any dispersing, stabilizing or surfactant agent.

The last step of the process 1 of the invention is the removal of the polar solvent used to obtain the dispersion of graphene oxide in step a) This can be done by subjecting the mixture obtained in step b) to high temperature under vacuum conditions. The temperature applied will depend on the solvent used. The higher the boiling point of the polar solvent, the higher the temperature applied to the mixture. A skilled person would know how to adapt the temperature and pressure conditions in order to remove the solvent used.

In a particular embodiment, when the polar solvent is water, the mixture can be heated at a temperature up to 90°C under vacuum conditions.

In contrast to the addition of graphene oxide in dry form, the use of a dispersion of graphene oxide to be mixed with the polyol ether, as in the present invention, avoids the agglomeration of the graphene oxide in the polymer composition. Thus, when the solvent is removed, the graphene oxide is already homogeneously dispersed in the polymer composition throughout the whole polymer matrix.

Furthermore, the use of a polyol ether with an equivalent molecular weight equal to or lower than 2,000 and polyethylene oxide terminal blocks constituting up to 20 wt% of the total weight of the polyol ether, allows the graphene oxide sheets to be properly dispersed even in the absence of dispersing agents, or of stabilizing or surfactants agents, as said polyol ether has an adequate viscosity and hydrophilicity to cause the right compatibility with graphene oxide, improving the dispersion thereof and, thus, allowing a more homogenous distribution of the graphene oxide throughout the polymer matrix.

As mentioned before, a further aspect of the present invention refers to a polymer composition obtainable by the process 1 as described herein above.

The polymer composition of the present invention can be processed by reaction with di- and/or polyisocyanates to give polyurethanes. Thus, another aspect of the present invention relates to a process (process 2) for the production of a polyurethane formulation, said process comprising the reaction of a polymer composition as defined above (polymer composition of the invention) with at least one di- or poly-isocyanate.

In particular, the polyol ether comprised in the composition of the invention is the one reacting with the isocyanate compound to give the polyurethane formulation, whereas graphene oxide remains homogeneously distributed throughout the polymer matrix. For this purpose, polyol ether having a functionality of at least 2 are employed, more preferably the polyol ether is a diol or triol.

This process for obtaining the polyurethane formulation can be carried out continuously or batchwise. The polyurethane producing reaction can be carried out in the absence of a reaction medium, or in the presence of a solvent non-reactive to the isocyanates.

The isocyanate compound reacts with the reactive end groups of the polyol ether to render higher molecular weight structures through chain extension and/or cross-linking. The resulting polymer comprises a plurality of segments derived from the polyol ether linked via urethane bonds.

The polymerization reaction can be carried out by mixing the polymer composition of the present invention with one or more di- or poly-isocyanates to cause the mixed components to be reacted with each other.

The polyurethane components can be mixed in a batch, mixed and dispersed continuously, or mixed continuously in an extruder.

In a particular embodiment, the polyurethane is obtained by reacting the polyol ether as defined herein above with a stoichiometric excess of one or more di- or polyisocyanates. As will be appreciated by those skilled in the art, the degree of polymerization (i.e., average number of polyol segments contained in the polymer chains) can be modified by controlling the relative amount of isocyanate as well as the order of reagent addition and the reaction conditions.

In another particular embodiment, the polyurethane has an isocyanate content of from 3 to 30 wt%, more preferably from 5 to 25 wt%, even more preferably from 5 to 10 wt%, on average in the polymer.

A large number of isocyanates are known in the art which can be used in the process for obtaining the polyurethane polymer. However, in a particular embodiment, the isocyanate used to prepare said polymer comprises two or more isocyanate groups per molecule.

In a particular embodiment, the isocyanate is a di-isocyanate. In another particular embodiment, the isocyanate is a higher polyisocyanate, such as a tri-isocyanate, a tetraisocyanate, a isocyanate polymer or oligomer, and the like, which are typically a minority component of a mix of predominantly diisocyanates.

In a particular embodiment, the isocyanate is an aliphatic or cycloaliphatic polyisocyanate or a derivative thereof or an oligomer of an aliphatic or cycloaliphatic polyisocyanate. In another particular embodiment, the isocyanate is an aromatic polyisocyanate or a derivative thereof or an oligomer of an aromatic polyisocyanate. In another particular embodiment, the isocyanate may comprise mixtures of any two or more of the above type of isocyanates.

Suitable aliphatic and cycloaliphatic isocyanate compounds include, for example, 1,3-trimethylene diisocyanate; 1,4-tetramethylene diisocyanate; 1,6-hexamethylene diisocyanate; 2,2,4-trimethylhexamethylene disocyanate; 2,4,4-trimethylhexamethylene disocyanate; 1,9-nonamethylene diisocyanate; 1,10-decamethylene diisocyanate; 1,4-cyclohexane diisocyanate; isophorone diisocyanate; 4,4'-dicyclohexylmethane diisocyanate; 2,2'-diethylether diisocyanate; hydrogenated xylylene diisocyanate, and hexamethylene diisocyanate-biuret.

The aromatic isocyanate compounds include, for example, p-phenylene diisocyanate; tolylene diisocyanate; xylylene diisocyanate; 4,4'-diphenyl diisocyanate; 2,4'-diphenylmethane diisocyanate; 1,5-naphthalene diisocyanate; 4,4'-diphenylmethane diisocyanate (MDI); 3,3'-methyleneditolylene-4,4'-diisocyanate; tolylenediisocyanatetrimethylolpropane adduct; triphenylmethane triisocyanate; 4,4'-diphenylether diisocyanate; tetrachlorophenylene diisocyanate; 3,3'-dichloro-4,4'-diphenylmethane diisocyanate; and triisocyanate phenylthiophosphate.

In a particular embodiment, the isocyanate is selected from the group consisting of 1,6-hexamethylaminediisocyanate (HDI); isophore diisocyanate (IPDI); 4,4-methylene bis(cyclohexyl isocyanate) (H12MDI); 2,4-toluene diisocyanate (TDI); 2,6-toluene diisocyanate (TDI); 4,4'-diphenylmethane diisocyaante (MDI); 2,4'-diphenylmethane diisocyaante (MDI); xylylene diisocyanate (XDI); 1,3-bis(isocyanmethyl)cyclohexane (H6-XDI); 2,2,4-trimethylhexamethylene diisocyaante; 2,4,4-trimethylhexamethylene diisocyaante (TMDI); m-tetramethylxylylene diisocyanate (TMXDI); p-tetramethylxylylene diisocyanate (TMXDI); isocyanatomethyl-1,8-octane diisocyanate (TIN); 4,4',4"-triphenylmethane triisocyanate; tris(p-isocyanatomethyl)thiosulfate; 1,3-bis(isocyanatomethyl)benzene; 1,4-tetramethylene diisocyanate; trimethylhexane diisocyanate; 1,6-hexamethylene diisocyanate; 1,4-cyclohexyl diisocyanate; lysine diisocyanate; HDI allophonate trimer; HDI-trimer and mixtures of any two or more thereof.

In a preferred embodiment, the isocyanate used to prepare the polyurethane polymer is 2,4-toluene diisocyanate (2,4-TDI) or 2,6-toluene diisocyanate (2,6-TDI).

Isocyanates suitable for obtaining the polyurethane polymer can be synthesized according to procedures already known for a skilled in the art. However, they are also available commercially under different trade names in various grades and formulations. The selection of suitable commercially-available isocyanates as reagent to produce polyurethane polymers is within the capability of one skilled in the art of polyurethanes technology.

In a particular embodiment of the invention, the process for obtaining the polyurethane formulation further comprises the addition of a catalyst to the reaction mixture. Conventional catalysts comprising an amine compound or a tin compound may be used to promote the polymerization reaction between the polymer composition of the invention and the isocyanate.

Any suitable urethane catalyst may be used, including tertiary amine compounds and organometallic compounds. Examples of tertiary amine compounds include triethylene diamine, N-methylmorpholine, N,N-dimethylcyclohexyl amine, pentamethyldiethylene triamine, tetramethylehtylene diamine, 1-methyl-4-dimethylaminoethylpiperazine, 3-methoxy-N-dimethylpropylamine, N-ethylmorpholine, diethylethanolamine, N,N-dimethyl-N,N'-dimethyl isopropylpropylene diamine, N,N-diethyl-3-diethylaminopropylamine, dimethylbenzylamine, DABCO, pentamethyldipropylenetriamine, bis(dimethylamino ethyl ether), dimethylcyclohexyl amine, DMT-30, triazabicyclodecene (TBD), N-methyl TBD, ammonium salts and combinations thereof. Examples of organometallic catalysts include organomercury, organolead, organoferric and organotin catalysts.

Suitable tin catalysts include stannous chloride; tin salts of carboxylic acids, such as dibutyltin dilaurate; dibutylbis(laurylthio) stannate, dibutyltinbis(isooctylmercapto acetate) and dibutyltinbis(isooctylmaleate) and tin octanoate.

Typical amounts of catalysts are 0.001 to 10 parts of catalyst per 100 parts by weight of total polyol in the mixture.

In addition to the polyurethane components mentioned above, customary auxiliaries and/or additives can also be added. Such additives may include, but are not limited to, plasticizers, lubricants, stabilizers, colorants, flame retardants, inorganic and/or organic fillers and reinforcing agents.

Plasticizers may be used to modify the rheological properties to a desired consistency. Such plasticizers should be free of water, inert to isocyanate groups and compatible with a polymer. Suitable plasticizers are well known to those skilled in the art and include, but are not limited to, alkyl phthalates such as dioctylphthalate or dibutyl phthalate, partially hydrogenated terpene, trioctyl phosphate, epoxy plasticizers, toluene-sulfamide, chloroparaffins, adipic acid esters, castor oil, toluene and alkyl naphthalenes. The plasticizer is added to the composition in a sufficient amount to provide the desired rheological properties and to disperse any catalyst that may be present in the system.

As lubricants, non-reactive liquids can be used to soften the thermoplastic polyurethane or to reduce its viscosity for improved processing. Examples of lubricants include fatty acid esters and/or fatty acid amides.

Stabilizers may include oxidation stabilizers, hydrolysis stabilizers and/or UV stabilizers. Examples of hydrolysis stabilizers include oligomeric and/or polymeric aliphatic or aromatic carbodiimides. As UV stabilizers, hydroxybenzotriazoles, zinc dibutyl thiocarbamate, 2,6-ditertiary butylcatechol, hydroxybenzophenones, hindered amines and phosphites can be used to improve the light stability of polyurethanes. Color pigments have also been used for this purpose.

The polyurethane formulation of the invention may further comprise one or more suitable colorants. Typical inorganic coloring agents include, but are not limited to, titanium dioxide, iron oxides and chromium oxides. Organic pigments may include azo/diazo dyes, phthalocyanines and dioxazines as well as carbon black.

The polyurethane formulation of the invention may further comprise one or more suitable flame retardants to reduce flammability. The choice of flame retardant often depends on the intended service application of the polyurethane and the attendant flammability testing scenario governing that application. Examples of such flame retardants include chlorinated phosphate esters, chlorinated paraffins and melamine powders.

The amount of the additives described above will vary depending on the desired application.

The polyurethane obtained according to the process mentioned above may have hydroxyl or isocyanate terminal groups. Thus, the polyurethane thus obtained can be further polymerized linearly or in a three-dimensional network structure by reacting with a compound having at least two hydrogen atoms reactive to isocyanate groups per molecule, or a compound having two isocyanate groups per molecule. Also, by reacting with a compound having a urethane bond and/or urea bond or a compound having at least three hydrogen atoms reactive to the isocyanate groups, the polyurethane can be modified with a cross-linking structure introduced therein.

Another aspect of the invention is directed to a polyurethane formulation obtainable by the process 2 as defined above.

The polyurethane formulation as described above can be used in CASE applications, i.e., in the preparation of coatings, adhesives, sealants and elastomers. Furthermore, said polyurethane formulation can be used in the preparation of a thermoplastic polyurethane and a polyurethane foam, among many other possible applications.

In a preferred embodiment, the polyurethane formulation is used to produce polyurethane foams.

In a particular embodiment, the polyurethane foams are prepared by a process comprising (i) reacting the polymer composition of the present invention with a blowing agent and with at least one di- or poly-isocyanate, and (ii) foaming up the reaction product obtained in step (i).

Generally, steps (i) and (ii) take place simultaneously, that is, while the polyol ether present in the formulation of the invention, the blowing agent and the isocyanate are reacting with one another, the reaction product formed undergoes foaming. It is also possible for foaming of the reaction product to continue after the end of reaction as well.

The reaction of the polymer composition, the blowing agent and the isocyanate is typically carried out at a temperature of 15 to 80 degrees centigrade, preferably of 20 to 60 degrees centigrade and more preferably from 20 to 35 degrees centigrade, optionally under elevated pressure. Mixing of all the components can be effected mechanically using a stirrer, using a stirred screw or by high-pressure mixing in a nozzle or mix head.

The foaming step is subsequently executed by expanding the incorporated blowing agent under the stated reaction conditions. Foaming can be effected in appropriate molds in order that the polyurethane foam may be obtained in corresponding geometric shapes.

The blowing agent can be a physical or chemical blowing agent. Chemical blowing agents include, for example, water, the reaction of which with isocyanate groups leads to CO₂ formation, or carboxylic acids, especially formic acid. Chemical blowing agents are generally used in an amount of 0.1 to 10 wt%, especially of 0.5 to 7 wt%, based on the total weight of the polyol ether comprised in the polymer composition of the invention.

Physical blowing agents include but are not limited to carbon dioxide, acetone, hydrocarbons such as n-pentane, isopentane or cyclopentane, cyclohexane, or halogenated hydrocarbons such as methylene chloride, tetrafluoroethane, pentafluoropropane, heptafluoropropane, pentafluorobutane, hexafluorobutane or dichloromonofluoroethane. The amount of physical blowing agent is preferably in the range from 1 to 15 wt%, in particular from 1 to 10 wt%. Among the physical blowing agents, preference is given to carbon dioxide which is preferably used in combination with water as chemical blowing agent.

As pointed out in the examples provided in this document, the polyurethane foams obtained from the polymer composition of the present invention are characterized by having an improved thermal stability, having been observed a reduction in the flame growth and combustion time, thus ameliorating the fireproof properties thereof. These advantages are deduced from the improved dispersion of the graphene oxide in the polymer matrix, even when low amounts of graphene oxide are incorporated therein.

The following examples merely illustrate the invention. Those skilled in the art will recognize many variations that can be performed without altering the functioning of the invention.

### Examples

### Example 1. Preparation of polymer composition A

A dispersion of graphene oxide containing 4.35 wt% of graphene oxide and 95.65 wt% of water was provided by Graphenea. 32 gr of said dispersion (1.37 gr of graphene oxide, the remaining weight being water) was homogenized for 10 min with a mechanical stirrer at high speed in a water bath at room temperature. The dispersion was subsequently subjected to sonication using cycles of 10 min with 60% of amplitude and 0.6 s pulses. The ultrasonic device used was Hielscher UP400S (400 watts, 24 kHz) at amplitude of 60-100%. UP400S device with sonotrodes of a diameter range from 3 to 22 mm was used for the sonication of sample volumes from 50 mL up to 2,000 mL.

In a 1,000 mL beaker, 137 gr of a polyol ether triol [polyol A] having the following properties was introduced:
Equivalent molecular weight: 1,600 g/mol
Polyethylene oxide terminal blocks: 13.1 wt%
Central backbone: a polypropylene oxide block

The dispersion of graphene oxide prepared according to the procedure described above was added to the polyol ether. The mixture was homogenized during at least 10 min in a Turrax^{®} T-10, first at low speed and gradually increasing the stirring speed up to the maximum allowed by the stirrer. After the stirring, a homogenous mixture is observed in which the graphene oxide is well dispersed. The mixture was left for 30 min without observing any change in the homogeneity and dispersion of the mixture.

The mixture was then dehydrated in a rotary evaporator, first at 70 mbar and 75 rpm and then gradually increasing the vacuum and the temperature at 95°C until a moisture content lower than 900 ppm was obtained.

Compositions having 0.01 wt% of graphene oxide were also prepared following the same procedure as above but diluting correspondently the graphene oxide dispersion.

### Example 2. Preparation of polymer composition B

A dispersion of graphene oxide containing 4.35 wt% of graphene oxide and 95.65 wt% of water was provided by Graphenea.

46 gr of said dispersion (2 gr of graphene oxide, the remaining weight being water) was homogenized for 10 min with a mechanical stirrer at high speed in a water bath at room temperature. The dispersion was subsequently subjected to sonication using cycles of 10 min with 60% of amplitude and 0.6 s pulses, using the same ultrasonic device as described in example 1.

In a 1,000 mL beaker, 200 gr of a polyol ether triol [polyol B] having the following properties was introduced:
Equivalent molecular weight: 1,666 g/mol
Polyethylene oxide terminal blocks: 20 wt%

Central backbone: ethylene oxide and propylene oxide units randomly distributed.

The dispersion of graphene oxide prepared according to the procedure described above was added to the polyol ether. The mixture was homogenized during at least 10 min in a Turrax^{®} T-10, first at low speed and gradually increasing the stirring speed up to the maximum allowed by the stirrer. After the stirring, a homogenous mixture is obtained in which the graphene oxide is well dispersed. The mixture was then left for 30 min without observing any change in the homogeneity and dispersion of the mixture.

The mixture was then dehydrated in a rotary evaporator, first at 70 mbar and 75 rpm and then gradually increasing the vacuum and the temperature to 95°C until a moisture content lower than 900 ppm was obtained.

For comparative purposes, dry graphene oxide was directly added to the polyol ether and the resulting mixture subjected to a homogenization procedure by stirring it in a Turrax^{®} using several cycles of at least 10 min. However, particle aggregates were visible at a glance.

Compositions having 0.01 wt% of graphene oxide were also prepared following the same procedure as above but diluting correspondently the graphene oxide dispersion.

### Example 3. Preparation of polymer composition C

A dispersion of graphene oxide containing 4.35 wt% of graphene oxide and 95.65 wt% of water was provided by Graphenea.

115 gr of said dispersion (5 gr of graphene oxide, the remaining weight being water) was homogenized for 10 min with a mechanical stirrer at high speed in a water bath at room temperature. The dispersion was subsequently subjected to sonication using cycles of 10 min with 60% of amplitude and 0.6 s pulses, using the same ultrasonic device as described in example 1.

In a 2,000 mL beaker, 500 gr of a polyol ether diol [polyol C] having the following properties was introduced:
Equivalent molecular weight: 2,000 g/mol
Polyethylene oxide terminal blocks: 20 wt%
Central backbone: a polypropylene oxide block.

The dispersion of graphene oxide prepared according to the procedure described above was added to the polyol ether. The mixture was homogenized during at least 10 min in a Turrax^{®} T-10, first at low speed and gradually increasing the stirring speed up to the maximum allowed by the stirrer. After the stirring, a homogenous mixture is obtained in which the graphene oxide is well dispersed. The mixture was then left for 30 min without observing any change in the homogeneity and dispersion of the mixture.

The mixture was then dehydrated in a rotary evaporator, first at 70 mbar and 75 rpm and then gradually increasing the vacuum and the temperature at 95°C until a moisture content lower than 900 ppm was obtained.

Compositions having 0.01 wt% of graphene oxide were also prepared following the same procedure as above but diluting correspondently the graphene oxide dispersion.

### Comparative example 1. Preparation of polymer composition D

A dispersion of graphene oxide containing 4.35 wt% of graphene oxide and 95.65 wt% of water was provided by Graphenea.

69 gr of said dispersion (3 gr of graphene oxide, the remaining weight being water) was homogenized for 10 min with a mechanical stirrer at high speed in a water bath at room temperature. The dispersion was subsequently subjected to sonication using cycles of 10 min with 60% of amplitude and 0.6 s pulses, using the same ultrasonic device as described in example 1.

In a 1,000 mL reaction flask, 300 gr of a polyol ether triol [polyol D] having the following properties was introduced:
Equivalent molecular weight: 1,000 g/mol
Terminal blocks: no polyethylene oxide
Central backbone: ethylene oxide and propylene oxide units randomly distributed with ethylene oxide content of 10 wt%.

The dispersion of graphene oxide prepared according to the procedure described above was added to the polyol ether. The mixture was homogenized during at least 10 min in a Turrax^{®} T-10, first at low speed and gradually increasing the stirring speed up to the maximum allowed by the stirrer. The mixture was then left for 30 min.

The mixture was then dehydrated in a rotary evaporator, first at 70 mbar and 75 rpm and then gradually increasing the vacuum and the temperature to 95°C until a moisture content lower than 900 ppm was obtained. However, a bad dispersion of graphene oxide was obtained as it precipitated. Actually, the resulting mixture had particle aggregates that formed deposits on the walls of the flask.

Only when the assay was repeated in the presence of a dispersant agent, the homogeneity of the mixture improved and the agglomerates were significantly reduced.

Similar procedures were carried out but replacing the polyol ether triol of comparative example 1 with a polypropylene oxide diol having an equivalent molecular weight of 500 and no polyethylene oxide terminal blocks. However, a bad dispersion of graphene oxide is also obtained as it precipitates as well.

Furthermore, other comparative examples were tried replacing the polyol ether triol of comparative example 1 with the following triblock copolymers of ethylene oxide - propylene oxide - ethylene oxide (EO-PO-EO):
P-123: a diol having and 30 wt% of polyethylene oxide terminal blocks and an equivalent molecular weight of 2,910 g/mol;
F-127: a diol having and 70 wt% of polyethylene oxide terminal blocks and an equivalent molecular weight of 6,300 g/mol.

However, these triblock copolymers are very viscous, nearly solid, having viscosities higher than 4.7x10⁷ cps which avoid the removal of all the water contained therein, not being easily processed. In fact, solvents or other liquid components are required in order to facilitate the dispersion of the graphene oxide.

It is deduced from these comparative examples that a particular weight content of polyethylene oxide terminal blocks and a low molecular weight are key factors for a polyol ether in order to obtain polymer compositions where graphene oxide can be appropriately dispersed.

### Example 4. Preparation of polyurethane foams

Polyurethane foams were prepared from the polymer compositions A and B obtained according to the procedures described in examples 1 and 2, respectively. For comparative purposes, a polyurethane foam was also prepared from polymer composition D obtained according to the procedure described in comparative example 1.

The procedure to obtain the different polyurethane foams was basically the same for all the polymer compositions.

Thus, to each of the polymer compositions, a predetermined amount of a polyisocyanate compound was added, followed by stirring and mixing by a high speed mixer for 5 seconds. The mixture was immediately poured into a mold of 400 mm in length, 400 mm in width and 100 mm in height. After curing, a flexible polyurethane foam was taken out and left to stand for at least 24 hours.

### Example 5. Thermal stability tests

All the foams prepared according to the procedures described in example 4 were subjected to combustion until they were completely burned.

In a first step of the combustion, the heating coming from an external source or from the combustion of the foam as such, induces the decomposition of the foam giving rise to volatile and flammable fragments, as well as carbonate residues. In a second step, said volatile and flammable fragments are oxidized in gas phase (oxygen + heating) and form the combustion products: fume, gases and heating.

A slow combustion can also be induced if, in the second step, the oxidation of carbonate residues in solid state is produced.

Thus, an increase in the thermal stability of the foam will delay the first step of the combustion, being the Thermal Gravimetric Analysis (TGA) an important assay to predict this behavior, i.e., whether a foam will have improved fireproof properties.

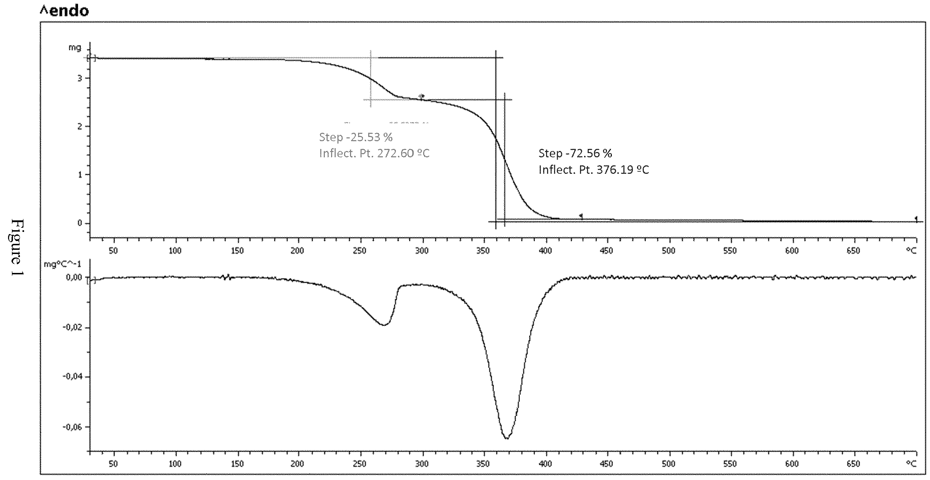

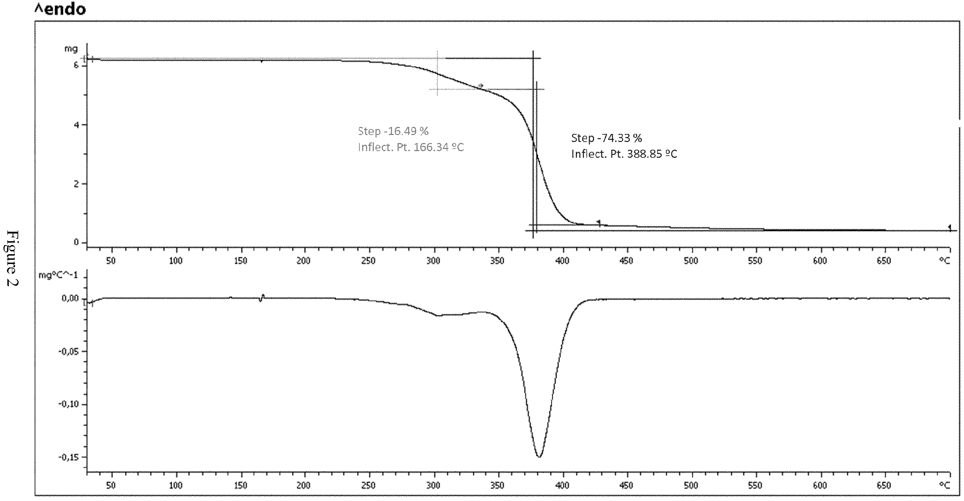

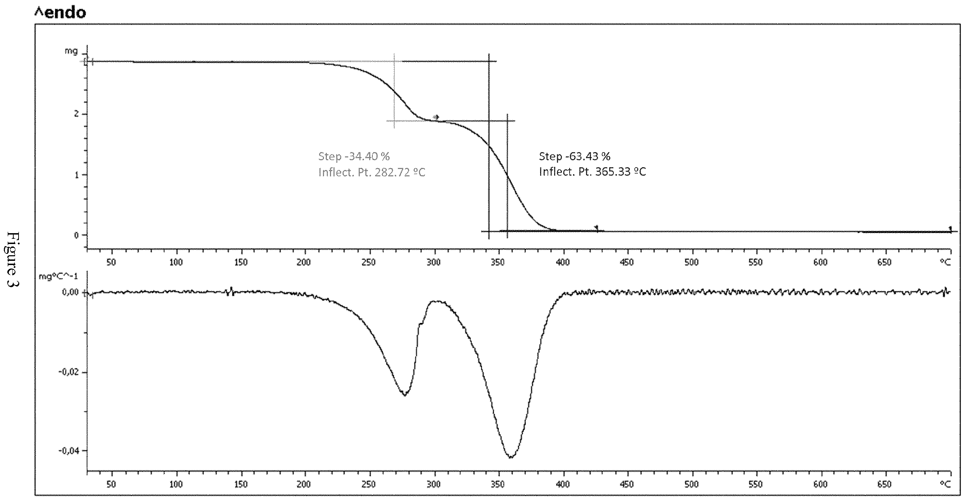

Figures 1 to 3 show the TGA results of the foams prepared according to the procedure of example 4. Said results were taken at 5°C/min under nitrogen atmosphere.

The results obtained from TGA show how the dispersion of graphene is a key factor to increase the thermal stability of the foam and, therefore, to improve the fireproof properties.

Furthermore, as it can be seen in Table 2, the foam obtained from the composition B shows the best dispersion degree, being the one having the lowest mass lost and the longest combustion time as it has the highest degradation temperature. On the contrary, the foam obtained from comparative composition D, degrades more rapidly as it burns in a few seconds with a high combustion rate.

**Table 2**

| Sample | TGA Max P1 (°C) | TGA Area P1 (%) | TGA Max P2 (°C) | TGA Area P2 (%) | TGA Residue (%) | Combustion time (s) | Average combustion rate (mm/min) |
|---|---|---|---|---|---|---|---|
| PU-A^{(a)} | 262.3 | 25.5 | 373.7 | 72.6 | 1.9 | 75.5 | 99.6 |
| PU-B^{(b)} | 309.1 | 16.5 | 387.7 | 74.3 | 9.2 | 96.0 | 78.7 |
| PU-D^{(d)} | 273.8 | 34.4 | 363.9 | 63.4 | 2.2 | 55.0 | 165.0 |

| | | | | | | | |
|---|---|---|---|---|---|---|---|
| ^{(a)} polyurethane foam obtained from polymer composition A ^{(b)} polyurethane foam obtained from polymer composition B ^{(d)} polyurethane foam obtained from comparative polymer composition D | | | | | | | |

Furthermore, in the case of foams obtained from compositions A and B, a reduction in the combustion time was also observed, even when the content of the graphene oxide is as low as 0.01 wt%.

### Example 6. Morphology tests

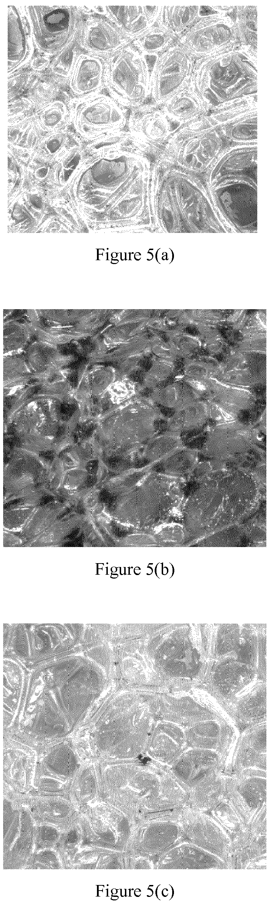

The morphology of the foams obtained according to the procedures described in example 4 were measured by Scanning Electron Microscope (SEM) and by Optical Microscopy. Figure 5 shows the images obtained for all the samples, wherein the major change is obtained for foams obtained from composition B. It is likely that the best dispersion of graphene oxide led to the highest influence in the morphology of the foams, particularly in the pore size.

## Claims

1. A polymer composition comprising:
a) a polyol ether comprising ethylene oxide units and propylene oxide units, wherein said polyol ether has:
- an equivalent molecular weight equal to or less than 2,000 g/mol;
- from 10 to 90 wt% of ethylene oxide units;
- a central backbone comprising propylene oxide units, or propylene oxide and ethylene oxide units randomly distributed within said central backbone,
- terminal groups consisting of polyethylene oxide blocks, wherein said polyethylene oxide blocks are present in the polyol ether in a weight proportion of up to 20 wt%,
wherein all the weight percentages are referred to the total weight of the polyol ether, and
b) graphene oxide.

2. The polymer composition according to claim 1, wherein the polyethylene oxide terminal blocks are present in the polyol ether in a weight proportion ranging from 0.5 to 20 wt%, with respect to the total weight of the polyol ether.

3. The polymer composition according to any of claims 1 or 2, wherein the polyethylene oxide terminal blocks are present in the polyol ether in a weight proportion ranging from 10 to 20 wt%, referred to the total weight of the polyol ether.

4. The polymer composition according to any one of claims 1 to 3, wherein the weight percentage of ethylene oxide in the polyol ether ranges from 10 to 90 wt%, and wherein up to 20 wt% of said weight percentage corresponds to polyethylene oxide terminal blocks, being the remaining weight, if any, ethylene oxide units randomly distributed throughout the central backbone of the polyol ether.

5. The polymer composition according to any one of claims 1 to 4, wherein the polyol ether comprises up to 20 wt% of ethylene oxide units, wherein all of them constitute the polyethylene oxide terminal blocks and the central polymer backbone comprises a polypropylene oxide block.

6. The polymer composition according to any one of claims 1 to 5, wherein the polyol ether is a diol or a triol.

7. The polymer composition according to any one of claims 1 to 6, wherein the polyol ether has an equivalent molecular weight ranging from 300 to 2,000 g/mol.

8. The polymer composition according to any one of claims 1 to 7, which comprises, on a dry weight basis, from 0.001 to 5 wt% of graphene oxide, referred to the total weight of the composition.

9. The polymer composition according to any one of claims 1 to 8 which is devoid of any dispersing agent.

10. A process for preparing a polymer composition as defined in claims 1 to 9, said process comprises:
a) providing a dispersion of graphene oxide in a polar solvent;
b) mixing the dispersion of graphene oxide provided in step a) with a polyol ether, wherein said polyol ether comprises ethylene oxide units and propylene oxide units, wherein said polyol ether has:
- an equivalent molecular weight equal to or less than 2,000 g/mol;
- from 10 to 90 wt% of ethylene oxide units;
- a central backbone comprising propylene oxide units, or propylene and ethylene oxide units randomly distributed within said central backbone,
- terminal groups consisting of polyethylene oxide blocks, wherein said polyethylene oxide blocks are present in the polyol ether in a weight proportion of up to 20 wt%,
wherein all the weight percentages are referred to the total weight of the polyol ether; and
c) removing the polar solvent from the mixture obtained in step b).

11. The process according to claim 10, wherein the polar solvent used in step a) is water.

12. The process according to claims 10 or 11, wherein the dispersion provided in step a) comprises from 0.1 to 10 wt% of graphene oxide.

13. A process for preparing a polyurethane formulation, said process comprises the reaction of a polymer composition as defined in any one of claims 1 to 9 with one or more di- or poly-isocyanates.

14. A polyurethane formulation obtainable by the process as defined in claim 13.

15. Use of a polyurethane formulation as defined in claim 14 in CASE applications and in the preparation of polyurethane foams and thermoplastic polyurethane.
